# EUROPEAN PATENT APPLICATION

(11) **EP 4 198 795 A1**
(43) Date of publication of application: **21.06.2023**
(21) Application number: 21856163.7
(22) Date of filing: 09.08.2021
(51) Int. Cl.: G06F 21/85, G06F 21/78, G06F 21/55

(54) **MOBILE COMPUTING DEVICE COMPRISING COMPARTMENTALIZED COMPUTING MODULE**

(30) Priority: 11.08.2020 KR 20200100816
(71) Applicant: Lee, Chung Jong, Gangwon-do 26248 (KR)
(72) Inventor: Lee, Chung Jong, Gangwon-do 26248 (KR)
(74) Representative: Gulde & Partner
(86) International application number: PCT/KR2021/010497
(87) International publication number: WO 2022/035157

(57) **Abstract**

Disclosed is a mobile computing device comprising a compartmentalized computing module. According to the mobile computing device comprising a compartmentalized computing module according to the present invention, when the transmission and reception of data are completed, the compartmentalized computing module can immediately switch off a transmission and reception line to minimize the risk of hacking and the like of a second computing module that is not connected to an external network.

## Description

### TECHNICAL FIELD

The present disclosure relates to a mobile computing device including a compartmentalized computing module. More particularly, the present disclosure relates to a mobile computing device including a compartmentalized computing module minimizing a risk such as hacking of a second computing module not connected to an external network by immediately switching off a transmission and reception line upon completion of data transmission and reception when data is received from a first computing module connected to the external network, or when data is transmitted to the first computing module.

### BACKGROUND ART

With the improvement of communication speed due to the advances in electronic and communication technologies, personal mobile communication terminals are becoming more advanced, including the service of transmitting and receiving a large amount of data.

Among the terminals, the smartphone is an intelligent terminal, which is a mobile phone with additional functions such as Internet communication and information search. The biggest feature of the smartphone is that a user may install desired applications on the phone. Users may perform Internet communication, fax transmission, and the like while on the move; some smartphone products are equipped with a function of personal information management.

A smartphone combines the advantages of a mobile phone and a personal digital assistant (PDA), which is a device that integrates data communication functions such as schedule management, fax transmission and reception, and Internet access with mobile phone functions.

Unlike existing mobile phones that are released as finished products and used only for pre-built functions, smartphones have the advantage that a user may install, add, or delete hundreds of various applications (application programs) at the user's own will.

In addition to the fact that smartphones may enable a user to access the Internet using the wireless Internet directly, smartphones provide advantageous features not supported by conventional mobile phones, such as accessing the Internet in various ways using different browsers, creating a desired application without help from others, implementing an interface suitable for the user using various applications, and sharing an application among smartphones run by the same operating system (OS).

Meanwhile, since almost all smartphones are equipped with a camera, a user uses the smartphone to store personal photos or videos for which privacy should be assured as well as the information related to the transmission and reception of the user's general voice or text. Since the user always carries a smartphone, the user often uses it to store documents that need to be kept confidential because of its convenience in storing and moving documents.

Therefore, high security is required to prevent various data stored in the smartphone from being leaked to the outside. Smartphone users may typically set a password and perform authentication by entering the set password before using the smartphone. The user may perform authentication by selecting a pattern instead of entering a password for the user's convenience; in some cases, the authentication process employs fingerprint recognition or voice recognition.

However, the smartphone authentication methods described above are easily exposed to others and yield very low security.

Moreover, since smartphones are configured to access an external network such as the Internet or an in-house computer network to transmit and receive data, they are exposed to the risk of being attacked by hacking, adware, ransomware, or viruses from the external network.

Even if a smartphone is equipped with security measures such as a vaccine program, it is always at risk of being infected with new viruses or hacked through defects in the operating system. A user sensitive to security may carry two smartphones, one for ordinary phone calls and data communication and the other for phone calls requiring security or storing data to be kept confidential.

In the case of smartphones for storing confidential data, it is desirable to configure them so that they are disconnected from an external network or so that connection time to the external network is minimized.

Meanwhile, in public institutions, people often use a computer not connected to an external network for data storage, separately from a computer connected to the external network. To move data, they connect a USB storage device to a computer connected to the external network, copy the data, disconnect the storage device, and connect the storage device to a computer not connected to the external network to copy the data from the storage device. By doing so, the risk of hacking against computers not connected to the external network is prevented passively.

However, smartphone security may not be sufficiently guaranteed by allowing the smartphone to be connected to an external network only for the moment of transmitting and receiving data.

(Patent document 1) Korean Patent Laid-Open Publication No. 10-0378522 (Publication date: April 03, 2003)

### SUMMARY

To solve the problems above, an object of the present disclosure is to provide a mobile computing device including a compartmentalized computing module that immediately switches off a transmission and reception line upon completion of data transmission and reception when data is received from a first computing module connected to an external network or when data is transmitted to the first computing module, thereby minimizing a risk such as hacking of a second computing module not connected to an external network.

Also, an object of the present disclosure is to allow the user to carry only one mobile computing device obviating the need for carrying two smartphones, one for storing confidential data and the other for data communication, by providing a mobile computing device including a compartmentalized computing module that may be operated by a user through manipulation of a user interface unit so that the user interface unit is connected to a first computing module or a second computing module embedded in one main body.

According to various embodiments of the present disclosure, a mobile computing device including a compartmentalized computing module comprises: a first computing module, which includes a first movement data storage unit, that is connected to an external network and stores reception data to be moved to another computing module and transmission data to be moved to the external network; a compartmentalized computing module, which includes a third movement data storage unit, that is connected to the first computing module through a third data monitoring line and a third data transmission and reception line, determines through the third data monitoring line whether the reception data exists in the first movement data storage unit of the first computing module, receives the reception data by switching on the third data transmission and reception line when the reception data exists in the first movement data storage unit, switches off the third data transmission and reception line upon completion of reception, and stores completely received reception data; a second computing module that is not connected to an external network and is connected to the compartmentalized computing module through a fourth data monitoring line and a fourth data transmission and reception line, determines through the fourth data monitoring line whether the reception data exists in the third movement data storage unit of the compartmentalized computing module, receives the reception data by switching on the fourth data transmission and reception line when the reception data exists in the third movement data storage unit, and switches off the fourth data transmission and reception line upon completion of reception; and a user interface unit, wherein a user manipulates the user interface unit to switch the user interface unit to be connected to the first computing module or the second computing module.

### ADVANTAGEOUS EFFECTS

A mobile computing device including a compartmentalized computing module according to the present disclosure enables the compartmentalized computing module to immediately switch off a transmission and reception line upon completion of data transmission and reception and thus minimizes a risk such as hacking of a second computing module not connected to an external network.

Also, a user may carry only one mobile computing device without the need to carry both a smartphone for storing confidential data and a smartphone for data communication.

### BRIEF DESCRIPTION OF THE DRAWINGS

FIG. 1 is a block diagram of a mobile computing device including a compartmentalized computing module according to a first embodiment of the present disclosure.
FIG. 2 is a block diagram of a mobile computing device including a compartmentalized computing module according to a second embodiment of the present disclosure.
FIG. 3 is a block diagram of a mobile computing device including a compartmentalized computing module according to a third embodiment of the present disclosure.
FIG. 4 is a block diagram of a mobile computing device including a compartmentalized computing module according to a fourth embodiment of the present disclosure.

### DESCRIPTION OF EXEMPLARY EMBODIMENTS

According to an aspect of the present disclosure, a mobile computing device including a compartmentalized computing module is proposed, the mobile computing device including a compartmentalized computing module comprises: a first computing module, which includes a first movement data storage unit, that is connected to an external network and stores reception data to be moved to another computing module and transmission data to be moved to the external network; a compartmentalized computing module, which includes a third movement data storage unit, that is connected to the first computing module through a third data monitoring line and a third data transmission and reception line, determines through the third data monitoring line whether the reception data exists in the first movement data storage unit of the first computing module, receives the reception data by switching on the third data transmission and reception line when the reception data exists in the first movement data storage unit, switches off the third data transmission and reception line upon completion of reception, and stores completely received reception data; a second computing module that is not connected to an external network and is connected to the compartmentalized computing module through a fourth data monitoring line and a fourth data transmission and reception line, determines through the fourth data monitoring line whether the reception data exists in the third movement data storage unit of the compartmentalized computing module, receives the reception data by switching on the fourth data transmission and reception line when the reception data exists in the third movement data storage unit, and switches off the fourth data transmission and reception line upon completion of reception; and a user interface unit, wherein a user manipulates the user interface unit to switch the user interface unit to be connected to the first computing module or the second computing module.

In what follows, preferred embodiments of the present disclosure will be described in detail with reference to appended drawings, and it should be noted that the present disclosure is not limited by or confined to the embodiments of the present disclosure.

In what follows, a structure of a mobile computing device including a compartmentalized computing module according to a first embodiment of the present disclosure will be described.

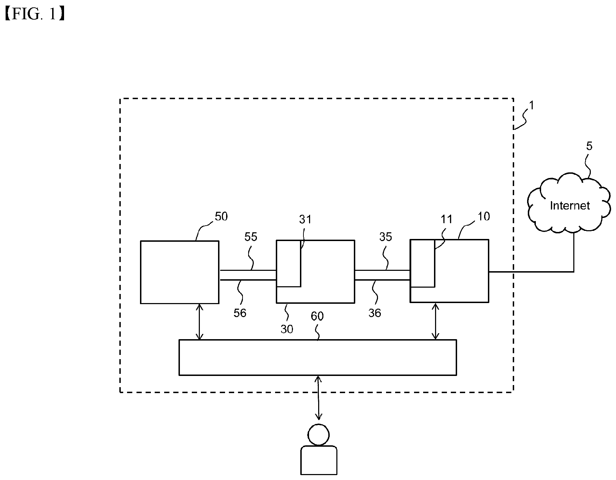

FIG. 1 is a block diagram of a mobile computing device including a compartmentalized computing module according to a first embodiment of the present disclosure.

A mobile computing device 1 including a compartmentalized computing module according to a first embodiment of the present disclosure includes a first computing module 10, a compartmentalized computing module 30, a second computing module 50, and a user interface unit 60.

The term 'computing module' used in the present disclosure refers to devices configured to independently perform individual tasks by including all constituting elements necessary for performing functions as a computer.

Therefore, a computing module has to include at least a CPU, a memory, and a storage device; the computing modules used in the mobile computing device including the compartmentalized computing module according to the present disclosure also include a network device for transmitting and receiving data.

If a computing module is required to process various tasks commanded by a user through a user interface, it is also necessary to include a constituting element such as a GPU.

However, if it is the case that the computing module has to perform only a limited series of tasks for a specific purpose, there is no need to have a constituting element such as a GPU.

Meanwhile, the computing modules according to the present disclosure are embedded in one mobile device, such as a smartphone, and the computing modules may include a separate wireless phone module, may be configured to have a structure integrating a wireless phone function, or may be configured to include an Accelerated Processing Unit (APU), which integrates a CPU and a GPU, a memory, and a storage device.

On the other hand, although not shown in FIG. 1, one or more GPS receivers are preferably built into the mobile computing device 1 including a compartmentalized computing module according to the present disclosure to be used by each computing module.

The first computing module 10 is a computing module connected to the external network 5 and includes a first movement data storage unit 11 that stores reception data to be moved to another computing module and transmission data to be moved to the external network 5.

Although FIG. 1 assumes that the external network 5 is the Internet, the external network 5 includes a 3G or 4G communication network, the Internet, or a closed network operated in a company or a public institution.

Being connected to the external network 5, the first computing module 10 performs a function of receiving reception data to be stored in the second computing module 50, a computing module for data storage not connected to the external network, from the external network 5 and storing the reception data primarily in the first movement data storage unit 11.

Meanwhile, the term 'reception data' used in the present disclosure refers to the data shown in FIGS. 1 to 4 to be moved from the first computing module 10 to the second computing module 50, and the term 'transmission data' refers to the data to be moved from the second computing module 50 to the first computing module 10.

As described above, reception data and transmission data are stored in the first movement data storage unit 11, which does not necessarily indicate that the transmission data stored in the first movement data storage unit 11 by the first computing module 10 have to be transmitted to the external network 5.

Among the data stored in the second computing module 50, the user classifies the data permitted to be transmitted to the external network 5 as transmission data, transmits the transmission data, stores the transmission data in the first movement data storage unit 11 of the first computing module 10, and transmits the transmission data stored in the first movement data storage unit 11 to the external network 5 when necessary.

As described above, the first movement data storage unit 11 stores the reception data received from the external network 5 and also stores the transmission data transmitted from the second computing module 50.

Data files stored in the first movement data storage unit 11 may be determined as reception data or transmission data according to reception data attributes or transmission data attributes assigned to the properties of individual files.

Alternatively, by designating a reception data storage area and a transmission data storage area in the first movement data storage unit 11 and storing reception data and transmission data in the reception and transmission data storage areas, respectively, reception and transmission data may be managed separately from each other.

Therefore, when the user interface unit 60 is connected to the first computing module 10, to transmit data received from the external network 5 to the second computing module 50, the user only has to store the received data in the first movement data storage unit 11 by assigning reception data attributes to the data file or store the data file in the reception data storage area of the first movement data storage unit 11.

Then, when the user interface unit 60 is connected to the first computing module 10, the user may transmit the transmission data stored in the first movement data storage unit 11 to the external network 5.

On the other hand, when the user interface unit 60 is connected to the first computing module 10, the user may classify the reception data stored in the first movement data storage unit 11 as transmission data again, assign transmission data attributes to the data file, and store the data file in the first movement data storage unit 11 or store the data file in the transmission data storage area of the first movement data storage unit 11.

In the same way, when the user interface unit 60 is connected to the first computing module 10, the user may classify the transmission data stored in the first movement data storage unit 11 as reception data again, assign reception data attributes to the data file, and store the data file in the first movement data storage unit 11 or store the data file in the reception data storage area of the first movement storage unit 11.

The compartmentalized computing module 30, which is a computing module connected to the first computing module 10 through a third data monitoring line 35 and a third data transmission and reception line 36, includes a third movement data storage unit 31.

The compartmentalized computing module 30 performs a function of minimizing modification of data or risk of hacking by receiving reception data stored in the first movement data storage unit 11 of the first computing module 10 and physically disconnecting a connection upon completion of data reception.

Since the third data monitoring line 35 is used to determine only whether reception data exists in the first movement data storage unit 11 of the first computing module 10, a large amount of data transmission is not required through the third data monitoring line 35.

The compartmentalized computing module 30 determines whether reception data exists in the first movement data storage unit 11 of the first computing module 10 through the third data monitoring line 35, receives the reception data by switching on the third data transmission and reception line 36 when the reception data exists in the first movement data storage unit 11, switches off the third data transmission and reception line 36 upon completion of reception, and stores completely received reception data in the third movement data storage unit 31.

However, it is preferable to operate the compartmentalized computing module 30 to estimate the time required for data reception by considering the size of reception data and the transfer speed of the third data transmission and reception line 36, measure the time elapsed since the initiation of data reception, and stop data reception and switch off the third data transmission and reception line 36 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the third data transmission and reception line 36 to be performed by a semiconductor switching element (not shown) to prevent noise generation and data distortion caused when a mechanical switching means is used.

As described above, while maintaining the third data transmission and reception line 36 used for data transmission and reception in a physically disconnected state, the compartmentalized computing module 30 switches on the third data transmission and reception line 36 and transmits and receives data only when data transmission and reception is required and immediately switches off the third data transmission and reception line 36 upon completion of data transmission and reception, thereby minimizing modification of data or risk of hacking.

The second computing module 50 is a computing module not connected to an external network but connected to the compartmentalized computing module 30 through the fourth data monitoring line 55 and the fourth data transmission and reception line 56.

The second computing module 50 performs a function of minimizing modification of data or risk of hacking by receiving reception data stored in the third movement data storage unit 31 of the compartmentalized computing module 30 and physically disconnecting a connection upon completion of data reception.

Since the fourth data monitoring line 55 is used to determine only whether reception data exists in the third movement data storage unit 31 of the compartmentalized computing module 30, a large amount of data transmission is not required through the fourth data monitoring line 55.

The second computing module 50 determines whether reception data exists in the third movement data storage unit 31 of the compartmentalized computing module 30 through the fourth data monitoring line 55, receives the reception data by switching on the fourth data transmission and reception line 56 when the reception data exists in the third movement data storage unit 31, and switches off the fourth data transmission and reception line 56 upon completion of reception.

However, it is preferable to operate the second computing module 50 to estimate the time required for data reception by considering the size of reception data and the transfer speed of the fourth data transmission and reception line 56, measure the time elapsed since the initiation of data reception, and stop data reception and switch off the fourth data transmission and reception line 56 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the fourth data transmission and reception line 56 to be performed by a semiconductor switching element (not shown) to prevent noise generation and data distortion caused when a mechanical switching means is used.

As described above, while maintaining the fourth data transmission and reception line 56 used for data transmission and reception in a physically disconnected state, the second computing module 50 switches on the fourth data transmission and reception line 56 and transmits and receives data only when data transmission and reception is required and immediately switches off the fourth data transmission and reception line 56 upon completion of data transmission and reception, thereby minimizing modification of data or risk of hacking.

As described above, since the reception data stored in the first movement data storage unit 11 of the first computing module 10 is received by the second computing module 50 through the compartmentalized computing module 30, when the user interface unit 60 is connected to the second computing module 50, the user is allowed to use the reception data by manipulating the user interface unit 60.

Meanwhile, when the user interface unit 60 is connected to the second computing module 50, the user may use a camera or a microphone of the user interface unit 60 to take personal photos or videos for which privacy has to be assured or generate confidential documents. The generated photos, videos, or documents may be stored in the second computing module 50.

Here, it is preferable to basically classify and store the generated data as reception data.

When transmission data to be moved to the external network 5 exists among the data stored in the second computing module 50, the user classifies the data as transmission data and commands the second computing module 50 to transmit the transmission data to the first computing module 10 through the compartmentalized computing module 30.

In other words, when transmission data to be moved to the external network 5 exists, the second computing module 50 switches on the fourth data transmission and reception line 56, transmits the transmission data to the third movement data storage unit 31 of the compartmentalized computing module 30, stores the transmission data therein, and switches off the fourth data transmission and reception line 56 upon completion of the transmission.

Meanwhile, the compartmentalized computing module 30 switches on the third data transmission and reception line 36, transmits the transmission data stored in the third movement data storage unit 31 to the first movement data storage unit 11 of the first computing module 10, stores the transmission data therein, and switches off the third data transmission and reception line 36 upon completion of the transmission.

Here, by allowing connection only up to the maximum connection time after data transmission starts, the second computing module 50 and the compartmentalized computing module 30 may prevent an abnormally large amount of data compared to the estimated data transmission amount from being transmitted.

As described above, since the transmission data is transmitted to the first computing module 10 through the compartmentalized computing module 30 and stored in the first movement data storage unit 11, when the user interface unit 60 is connected to the first computing module 10, the user is allowed to use the transmission data stored in the first movement data storage unit 11 by manipulating the user interface unit 60.

As described above, the third movement data storage unit 31 stores the reception data received from the first computing module 10 and also stores the transmission data received from the second computing module 50.

Therefore, the reception data stored in the third movement data storage unit 31 of the compartmentalized computing module 30 is received by the second computing module 50 through the fourth data transmission and reception line 56, and the transmission data stored in the third movement data storage unit 31 is received by the first computing module 10 through the third data transmission and reception line 36 and stored in the first movement data storage unit 11.

The user interface unit 60 is a constituting element that provides an environment in which the user may exchange information with the first computing module 10 or the second computing module 50, which includes at least one or more of a touch screen and buttons, a display, a microphone, a speaker, and a camera.

The mobile computing device 1 including the compartmentalized computing module according to the present disclosure is characterized to be operated by a user through manipulation of the user interface unit 60 so that the user interface unit is connected to the first computing module 10 or the second computing module 50.

Since the first computing module 10, the compartmentalized computing module 30, and the second computing module 50 are embedded in the main body of the mobile computing device 1 including the compartmentalized computing module according to the present disclosure, the user may command each of the first computing module 10 and the second computing module 50 to perform various tasks through the user interface unit 60.

Therefore, although they may look the same as a general computer, internally, the first computing module 10, the compartmentalized computing module 30, and the second computing module 40 are operated simultaneously.

In this case, the user selects a computing module to perform a specific task from the first computing module 10 and the second computing module 50 and commands the selected computing module to perform the task while the user interface unit 60 is connected to the computing module.

Meanwhile, when the user wants to command another computing module to perform a task, the user performs switching to connect the user interface unit 60 to another computing module and commands the computing module to perform the task.

However, since the camera included in the user interface unit 60 is highly likely to be used for creating personal photos or videos for which privacy has to be assured, preventing the camera from being connected to the first computing module 10 is advantageous to improve security when the user interface unit 60 is connected to the first computing module 10.

Therefore, when the user interface unit 60 is connected to the first computing module 10, the camera is not connected to the first computing module 10. However, when the user interface unit 60 is connected to the second computing module 50, it is preferable to configure the camera to be connected to the second computing module 50.

In what follows, a structure of a mobile computing device including a compartmentalized computing module according to a second embodiment of the present disclosure will be described.

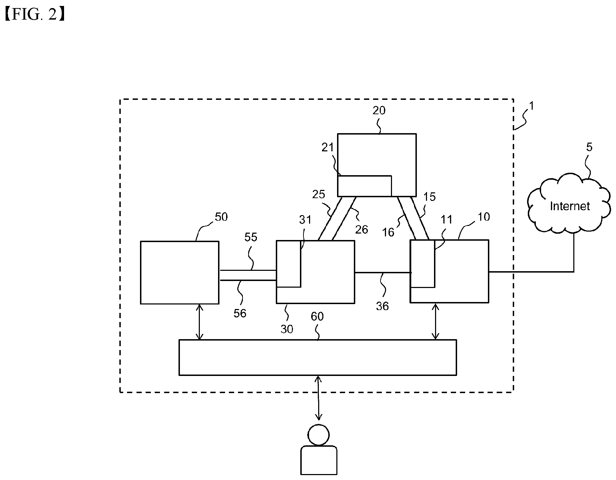

FIG. 2 is a block diagram of a mobile computing device including a compartmentalized computing module according to a second embodiment of the present disclosure.

A mobile computing device 1 including a compartmentalized computing module according to a second embodiment of the present disclosure includes a first computing module 10, an inspection computing module 20, a compartmentalized computing module 30, a second computing module 50, and a user interface unit 60.

Since the first computing module 10 is the same as described in the first embodiment, the descriptions of the first computing module 10 will not be repeated below.

The inspection computing module 20 is a computing module connected to a first computing module 10 through a first data monitoring line 15 and a first data transmission and reception line 16 and includes a second movement data storage unit 21 storing reception data.

The inspection computing module 20 performs a function of minimizing modification of data or risk of hacking by receiving reception data stored in the first movement data storage unit 11 of the first computing module 10, physically disconnecting a connection upon completion of data reception, and determining whether the received reception data is suitable to be moved to another computing module.

Since the first data monitoring line 15 is used to determine only whether reception data exists in the first movement data storage unit 11 of the first computing module 10, a large amount of data transmission is not required through the first data monitoring line 15.

The inspection computing module 20 determines whether reception data exists in the first movement data storage unit 11 of the first computing module 10 through the first data monitoring line 15, receives the reception data by switching on the first data transmission and reception line 16 when the reception data exists in the first movement data storage unit 11, and switches off the first data transmission and reception line 16 upon completion of reception.

However, it is preferable to operate the inspection computing module 20 to estimate the time required for data reception by considering the size of reception data and the transfer speed of the first data transmission and reception line 16, measure the time elapsed since the initiation of data reception, and stop data reception and switch off the first data transmission and reception line 16 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the first data transmission and reception line 16 to be performed by a semiconductor switching element (not shown) to prevent noise generation and data distortion caused when a mechanical switching means is used.

As described above, while maintaining the first data transmission and reception line 16 used for data transmission and reception in a physically disconnected state, the inspection computing module 20 switches on the first data transmission and reception line 16 and transmits and receives data only when data transmission and reception is required and immediately switches off the first data transmission and reception line 16 upon completion of data transmission and reception, thereby minimizing modification of data or risk of hacking.

When receiving of reception data is completed, the inspection computing module 20 determines whether the received reception data is suitable to be moved to another computing module.

For example, when the data storage computing module allows transmission and storage only for data files but does not allow transmission and storage for program files, the inspection computing module 20 examines whether program code is included in the reception data and determines the reception data to be unsuitable to be moved to another computing module if the reception data includes program code.

To this end, a vaccine program for inspection may be installed in the inspection computing module 20. The engine of the vaccine program may be configured to be updated manually or automatically through an external network.

However, when the engine of the vaccine program is configured to be automatically updated through an external network, to improve security, the inspection computing module 20 should be configured to access only a specific address for updating the engine of the vaccine program.

If a determination result of whether the reception data is suitable to be moved to another computing module indicates that the data is suitable to be moved to another computing module, the inspection computing module 20 stores the reception data in the second movement data storage unit 21.

If a determination result of whether the reception data is suitable to be moved to another computing module indicates that the data is not suitable to be moved to another computing module, the inspection computing module 20 determines whether the reception data is curable and treats the reception data using a vaccine program if the reception data is determined to be curable.

Meanwhile, upon completion of treatment of the reception data, the inspection computing module 20 stores the treated data in the second movement data storage unit 21.

Encryption techniques may be employed for data transmission between the first computing module 10 and the inspection computing module 20 to prevent the reception data stored in the first movement data storage unit 11 of the first computing module 10 from being modified or corrupted.

When an encryption technique is used, and a determination result of whether reception data exists in the first movement data storage unit 11 of the first computing module 10 through the first data monitoring line 15 indicates that the reception data exists in the first mobile data storage unit 11, the inspection computing module 20 switches on the first data transmission and reception line 16, requests the first computing module 10 to encrypt reception data stored in the first movement data storage unit 11 using an encryption key, and switches off the first data transmission and reception line 16.

Then, the inspection computing module 20 determines through the first data monitoring line 15 whether encryption of the reception data is completed. If it is determined that the encryption is completed, the inspection computing module 20 switches on the first data transmission and reception line 16 to receive encrypted data and switches off the first data transmission and reception line 16 when reception of the encrypted data is completed.

When the reception of the encrypted data is completed, the inspection computing module 20 decrypts the received encrypted data using a decryption key and determines whether the decrypted data is suitable to be moved to another computing module.

Here, the encryption method may use a secret key encryption method in which encryption and decryption keys are the same or a public key encryption method in which encryption and decryption keys are different from each other.

By using the encryption method, it is possible to clearly prevent the content of the reception data from being modified or corrupted before or while the inspection computing module 20 receives the reception data after the reception data is stored in the first movement data storage unit 11 of the first computing module 10.

If a determination result of whether the decrypted data is suitable to be moved to another computing module indicates that the decrypted data is suitable to be moved to another computing module, the inspection computing module 20 stores the decrypted data in the second movement data storage unit 21.

If a determination result of whether the decrypted data is suitable to be moved to another computing module indicates that the decrypted data is not suitable to be moved to another computing module, the inspection computing module 20 determines whether the decrypted data is curable and treats the decrypted data using a vaccine program if the decrypted data is determined to be curable.

When the treatment of the decrypted data is completed, the inspection computing module 20 stores the treated data in the second movement data storage unit 21.

The compartmentalized computing module 30, which is a computing module connected to the inspection computing module 20 through the second data monitoring line 25 and the second data transmission and reception line 26 and connected to the first computing module 10 through the third data transmission and reception line 36, includes a third movement data storage unit 31 storing reception data and transmission data.

The compartmentalized computing module 30 performs a function of minimizing modification of data or risk of hacking by receiving reception data, decrypted data, or treated data stored in the second movement data storage unit 21 of the inspection computing module 20 and physically disconnecting a connection upon completion of data reception.

Since the second data monitoring line 25 is used to determine only whether reception data, decrypted data, or treated data exists in the second movement data storage unit 21 of the inspection computing module 20, a large amount of data transmission is not required through the second data monitoring line 25.

The compartmentalized computing module 30 determines whether reception data, decrypted data, or treated data exists in the second movement data storage unit 21 of the inspection computing module 20 through the second data monitoring line 25, receives the reception data, decrypted data, or treated data by switching on the second data transmission and reception line 26 when the reception data, decrypted data, or treated data exists in the second movement data storage unit 21, switches off the second data transmission and reception line 26 upon completion of reception, and stores completely received reception data, decrypted data, or treated data in the third movement data storage unit 31.

However, it is preferable to operate the compartmentalized computing module 30 to estimate the time required for data reception by considering the size of reception data, decrypted data, or treated data and the transfer speed of the second data transmission and reception line 26, measure the time elapsed since the initiation of data reception, and stop data reception and switch off the second data transmission and reception line 26 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the second data transmission and reception line 26 to be performed by a semiconductor switching element (not shown) to prevent noise generation and data distortion caused when a mechanical switching means is used.

As described above, while maintaining the second data transmission and reception line 26 used for data transmission and reception in a physically disconnected state, the compartmentalized computing module 30 switches on the second data transmission and reception line 26 and transmits and receives data only when data transmission and reception is required and immediately switches off the second data transmission and reception line 26 upon completion of data transmission and reception, thereby minimizing modification of data or risk of hacking.

The second computing module 50 is a computing module not connected to an external network but connected to the compartmentalized computing module 30 through the fourth data monitoring line 55 and the fourth data transmission and reception line 56. The second computing module 50 receives reception data, decrypted data, or treated data stored in the third movement data storage unit 31 of the compartmentalized computing module 30 through the fourth data transmission and reception line 56.

The second computing module 40 performs a function of minimizing modification of data or risk of hacking by receiving reception data, decrypted data, or treated data stored in the third movement data storage unit 31 of the compartmentalized computing module 30 and physically disconnecting a connection upon completion of data reception.

Since the fourth data monitoring line 55 is used to determine only whether reception data, decrypted data, or treated data exists in the third movement data storage unit 31 of the compartmentalized computing module 30, a large amount of data transmission is not required through the fourth data monitoring line 55.

The second computing module 50 determines whether reception data, decrypted data, or treated data exists in the third movement data storage unit 31 of the compartmentalized computing module 30 through the fourth data monitoring line 55, receives the reception data, decrypted data, or treated data by switching on the fourth data transmission and reception line 56 when the reception data, decrypted data, or treated data exists in the third movement data storage unit 31, and switches off the fourth data transmission and reception line 56 upon completion of reception.

However, it is preferable to operate the second computing module 50 to estimate the time required for data reception by considering the size of reception data, decrypted data, or treated data and the transfer speed of the fourth data transmission and reception line 56, measure the time elapsed since the initiation of data reception, and stop data reception and switch off the fourth data transmission and reception line 56 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data compared to the estimated data transmission amount from being received.

Meanwhile, it is preferable to configure the switching of the fourth data transmission and reception line 56 to be performed by a semiconductor switching element (not shown) to prevent noise generation and data distortion caused when a mechanical switching means is used.

As described above, while maintaining the fourth data transmission and reception line 56 used for data transmission and reception in a physically disconnected state, the second computing module 50 switches on the fourth data transmission and reception line 56 and transmits and receives data only when data transmission and reception is required and immediately switches off the fourth data transmission and reception line 56 upon completion of data transmission and reception, thereby minimizing modification of data or risk of hacking.

As described above, since the reception data stored in the first movement data storage unit 11 of the first computing module 10 is received by the second computing module 50 through the compartmentalized computing module 30, when the user interface unit 60 is connected to the second computing module 50, the user is allowed to use the reception data by manipulating the user interface unit 60.

Meanwhile, when the user interface unit 60 is connected to the second computing module 50, the user may use a camera or a microphone of the user interface unit 60 to take personal photos or videos for which privacy has to be assured or generate confidential documents. The generated photos, videos, or documents may be stored in the second computing module 50.

Here, it is preferable to basically classify and store the generated data as reception data.

When transmission data to be moved to the external network 5 exists among the data stored in the second computing module 50, the user classifies the data as transmission data and commands the second computing module 50 to transmit the transmission data to the first computing module 10 through the compartmentalized computing module 30.

In other words, when transmission data to be moved to the external network 5 exists, the second computing module 50 switches on the fourth data transmission and reception line 56, transmits the transmission data to the third movement data storage unit 31 of the compartmentalized computing module 30, stores the transmission data therein, and switches off the fourth data transmission and reception line 56 upon completion of the transmission.

Meanwhile, the compartmentalized computing module 30 switches on the third data transmission and reception line 36, transmits the transmission data stored in the third movement data storage unit 31 to the first movement data storage unit 11 of the first computing module 10, stores the transmission data therein, and switches off the third data transmission and reception line 36 upon completion of the transmission.

Here, by allowing connection only up to the maximum connection time after data transmission starts, the second computing module 50 and the compartmentalized computing module 30 may prevent an abnormally large amount of data compared to the estimated data transmission amount from being transmitted.

As described above, since the transmission data is transmitted to the first computing module 10 through the compartmentalized computing module 30 and stored in the first movement data storage unit 11, when the user interface unit 60 is connected to the first computing module 10, the user is allowed to use the transmission data stored in the first movement data storage unit 11 by manipulating the user interface unit 60.

As described above, the third movement data storage unit 31 stores the reception data, decrypted data, or treated data received from the inspection computing module 20 and also stores the transmission data transmitted from the second computing module 50.

Therefore, the reception data, decrypted data, or treated data stored in the third movement data storage unit 31 of the compartmentalized computing module 30 is received by the second computing module 50 through the fourth data transmission and reception line 56, and the transmission data stored in the third movement data storage unit 31 is received by the first computing module 10 through the third data transmission and reception line 36 and stored in the first movement data storage unit 11.

Since the user interface unit 60 is the same as described in the first embodiment, descriptions of the user interface unit 60 will not be repeated.

In what follows, a structure of a mobile computing device including a compartmentalized computing module according to a third embodiment of the present disclosure will be described.

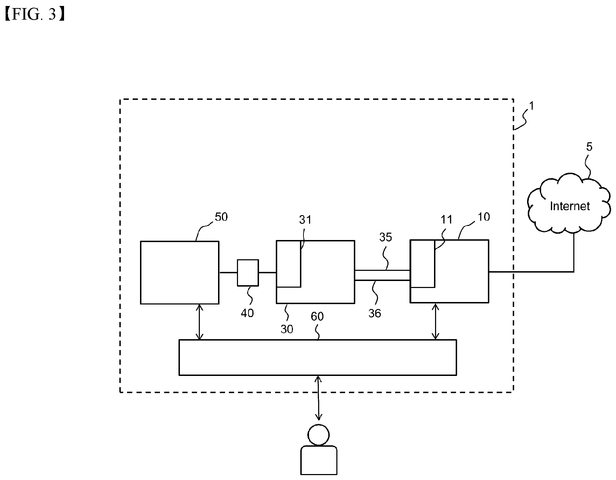

FIG. 3 is a block diagram of a mobile computing device including a compartmentalized computing module according to a third embodiment of the present disclosure.

A mobile computing device 1 including a compartmentalized computing module according to a third embodiment of the present disclosure includes a first computing module 10, a compartmentalized computing module 30, a compartmentalized storage module 40, a second computing module 50, and a user interface unit 60.

Since the first computing module 10 is the same as described in the first embodiment, the descriptions of the first computing module 10 will not be repeated below.

The second computing module 50 is a computing module not connected to an external network.

When the user interface unit 60 is connected to the second computing module 50, the user may use a camera or a microphone of the user interface unit 60 to take personal photos or videos for which privacy has to be assured or generate confidential documents. The generated photos, videos, or documents may be stored in the second computing module 50.

Here, it is preferable to basically classify and store the generated data as reception data.

The compartmentalized storage module 40 is a constituting element storing reception data and transmission data to be transmitted and received between the compartmentalized computing module 30 and the second computing 50, which is configured to be selectively connected to the compartmentalized computing module 30 or the second computing module 50.

When the user interface unit 60 is connected to the first computing module 10, the compartmentalized storage module 40 is connected to the compartmentalized computing module 30, receives the reception data stored in the third movement data storage unit 31 from the compartmentalized computing module 30, and stores the received reception data.

Meanwhile, when the user interface unit 60 is connected to the second computing module 50, the compartmentalized storage module 40 is connected to the second computing module 50, and the user may read the reception data stored in the compartmentalized storage module 40, copy the reception data stored in the compartmentalized storage module 40 to the second computing module 50, and store the transmission data in the compartmentalized storage module 40 by manipulating the user interface unit 60.

As described above, since the reception data stored in the first mobile data storage unit 11 of the first computing module 10 is received by and stored in the compartmentalized storage module 40 through the compartmentalized computing module 30, the user may manipulate the user interface unit 60 to use the reception data stored in the compartmentalized storage module 40 when the user interface unit 60 is connected to the second computing module 50.

It should be noted, however, that the reception data is moved to the second computing module 50 only when the user reads the reception data stored in the compartmentalized storage module 40 or copies the reception data stored in the compartmentalized storage module 40 to the second computing module 50 by manipulating the user interface unit 60 while the user interface unit 60 is connected to the second computing module 50.

In other words, since the reception data stored in the compartmentalized storage module 40 is moved to the second computing module 50 through the compartmentalized computing module 30 from the first computing module 10 only by the user's command, data transmission of the reception data to the second computing module 50 without being noticed by the user is inherently blocked, and thus, security improvement may be expected.

When the user interface unit 60 is connected again to the first computing module 10, the compartmentalized storage module 40 is connected to the compartmentalized computing module 30; thus, the compartmentalized computing module 30 receives the transmission data stored in the compartmentalized storage module 40 and stores the received transmission data in the third movement data storage unit 31.

Meanwhile, the compartmentalized computing module 30 switches on the third data transmission and reception line 36, transmits the transmission data stored in the third movement data storage unit 31 to the first movement data storage unit 11 of the first computing module 10, and switches off the third data transmission and reception line 36 upon completion of transmitting the transmission data.

Here, by allowing connection only up to the maximum connection time after data transmission starts, the compartmentalized computing module 30 may prevent an abnormally large amount of data compared to the estimated data transmission amount from being transmitted.

As described above, since the transmission data stored in the compartmentalized storage module 40 is transmitted to the first computing module 10 through the compartmentalized computing module 30 and stored in the first movement data storage unit 11, when the user interface unit 60 is connected to the first computing module 10, the user is allowed to use the transmission data stored in the first movement data storage unit 11 by manipulating the user interface unit 60.

As described above, the third movement data storage unit 31 stores the reception data received from the first computing module 10 and also stores the transmission data received from the compartmentalized computing module 40.

Therefore, the reception data stored in the third movement data storage unit 31 of the compartmentalized computing module 30 is received by the compartmentalized computing module 40, and the transmission data stored in the third movement data storage unit 31 is transmitted to the first computing module 10 through the third data transmission and reception line 36 and stored in the first movement data storage unit 11.

Since the user interface unit 60 is the same as described in the first embodiment, descriptions of the user interface unit 60 will not be repeated.

In what follows, a structure of a mobile computing device including a compartmentalized computing module according to a fourth embodiment of the present disclosure will be described.

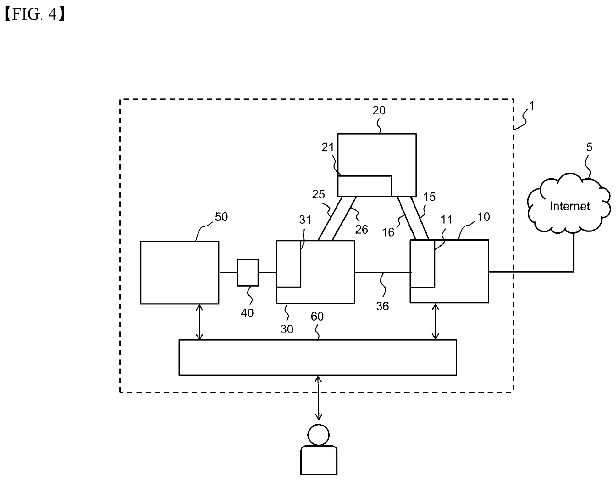

FIG. 4 is a block diagram of a mobile computing device including a compartmentalized computing module according to a fourth embodiment of the present disclosure.

A mobile computing device 1 including a compartmentalized computing module according to a fourth embodiment of the present disclosure includes a first computing module 10, an inspection computing module 20, a compartmentalized computing module 30, a compartmentalized storage module 40, a second computing module 50, and a user interface unit 60.

Since the first computing module 10, the inspection computing module 20, and the compartmentalized computing module 30 are the same as described in the second embodiment, the descriptions of the first computing module 10, the inspection computing module 20, and the compartmentalized computing module 30 will not be repeated below.

The second computing module 50 is a computing module not connected to an external network.

When the user interface unit 60 is connected to the second computing module 50, the user may use a camera or a microphone of the user interface unit 60 to take personal photos or videos for which privacy has to be assured or generate confidential documents. The generated photos, videos, or documents may be stored in the second computing module 50.

Here, it is preferable to basically classify and store the generated data as reception data.

The compartmentalized storage module 40 is a constituting element storing reception data and transmission data to be transmitted and received between the compartmentalized computing module 30 and the second computing 50, which is configured to be selectively connected to the compartmentalized computing module 30 or the second computing module 50.

When the user interface unit 60 is connected to the first computing module 10, the compartmentalized storage module 40 is connected to the compartmentalized computing module 30, receives the reception data, decrypted data, or treated data stored in the third movement data storage unit 31 from the compartmentalized computing module 30, and stores the received reception data, decrypted data, or treated data.

Meanwhile, when the user interface unit 60 is connected to the second computing module 50, the compartmentalized storage module 40 is connected to the second computing module 50, and the user may read the reception data, decrypted data, or treated data stored in the compartmentalized storage module 40, copy the reception data, decrypted data, or treated data stored in the compartmentalized storage module 40 to the second computing module 50, and store the transmission data in the compartmentalized storage module 40 by manipulating the user interface unit 60.

As described above, since the reception data stored in the first mobile data storage unit 11 of the first computing module 10 is received by and stored in the compartmentalized storage module 40 through the inspection computing module 20 and the compartmentalized computing module 30, the user may manipulate the user interface unit 60 to use the reception data, decrypted data, or treated data stored in the compartmentalized storage module 40 when the user interface unit 60 is connected to the second computing module 50.

It should be noted, however, that the reception data, decrypted data, or treated data is moved to the second computing module 50 only when the user reads the reception data, decrypted data, or treated data stored in the compartmentalized storage module 40 or copies the reception data, decrypted data, or treated data stored in the compartmentalized storage module 40 to the second computing module 50 by manipulating the user interface unit 60 while the user interface unit 60 is connected to the second computing module 50.

In other words, since the reception data, decrypted data, or treated data stored in the compartmentalized storage module 40 is moved to the second computing module 50 through the inspection computing module 20 and the compartmentalized computing module 30 from the first computing module 10 only by the user's command, data transmission of the reception data, decrypted data, or treatment data to the second computing module 50 without being noticed by the user is inherently blocked, and thus, security improvement may be expected.

When the user interface unit 60 is connected again to the first computing module 10, the compartmentalized storage module 40 is connected to the compartmentalized computing module 30; thus, the compartmentalized computing module 30 receives the transmission data stored in the compartmentalized storage module 40 and stores the received transmission data in the third movement data storage unit 31.

Meanwhile, the compartmentalized computing module 30 switches on the third data transmission and reception line 36, transmits the transmission data to the first computing module 10, stores the transmission data in the first movement data storage unit 11, and switches off the third data transmission and reception line 36 upon completion of data transmission.

Here, by allowing connection only up to the maximum connection time after data transmission starts, the compartmentalized computing module 30 may prevent an abnormally large amount of data compared to the estimated data transmission amount from being transmitted.

As described above, since the transmission data stored in the compartmentalized storage module 40 is transmitted to the first computing module 10 through the compartmentalized computing module 30 and stored in the first movement data storage unit 11, when the user interface unit 60 is connected to the first computing module 10, the user is allowed to use the transmission data stored in the first movement data storage unit 11 by manipulating the user interface unit 60.

As described above, the third movement data storage unit 31 stores the reception data, decrypted data, or treated data received from the inspection computing module 20 and also stores the transmission data received from the compartmentalized computing module 40.

Therefore, the reception data, decrypted data, or treated data stored in the third movement data storage unit 31 of the compartmentalized computing module 30 is received by the compartmentalized computing module 40, and the transmission data stored in the third movement data storage unit 31 is transmitted to the first computing module 10 through the third data transmission and reception line 36 and stored in the first movement data storage unit 11.

Since the user interface unit 60 is the same as described in the first embodiment, descriptions of the user interface unit 60 will not be repeated.

A mobile computing device including a compartmentalized computing module according to the present disclosure enables the compartmentalized computing module to immediately switch off a transmission and reception line upon completion of data transmission and reception and thus minimizes a risk such as hacking of a second computing module not connected to an external network.

Also, a user may carry only one mobile computing device without the need to carry both a smartphone for storing confidential data and a smartphone for data communication.

Throughout the document, the present disclosure has been described in detail according to the embodiments; however, the present disclosure is not limited to the embodiments but may be modified or changed in various ways without deviating from the technical principles and scope of the present disclosure. Therefore, the modifications or changes should be interpreted to belong to the technical scope of the present disclosure.

### [Detailed Description of Main Elements]

| | | | |
|---|---|---|---|
| 1: | Mobile computing device including a compartmentalized computing module | | |
| 10: | First computing module | 11: | First movement data storage unit |
| 15: | First data monitoring line | 16: | First data transmission and reception line |
| 20: | Inspection computing module | 21: | Second movement data storage unit |
| 25: | Second data monitoring line | 26: | Second data transmission and reception line |
| 30: | Compartmentalized computing module | 31: | Third movement data storage unit |
| 35: | Third data monitoring line | 36: | Third data transmission and reception line |
| 40: | Compartmentalized storage module | | |
| 50: | Second computing module | | |
| 55: | Fourth data monitoring line | 56: | Fourth data transmission and reception line |
| 60: | User interface unit | | |

### INDUSTRIAL AVAILABILITY

The present disclosure relates to a mobile computing device including a compartmentalized computing module. The present disclosure enables the compartmentalized computing module to immediately switch off a transmission and reception line upon completion of data transmission and reception and thus minimizes a risk such as hacking of a second computing module not connected to an external network, which may be used in the fields such as smartphone manufacturing and smartphone security.

## Claims

1. A mobile computing device 1 including a compartmentalized computing module 30, the device 1 comprising:
a first computing module 10, which includes a first movement data storage unit 11, that is connected to an external network and stores reception data to be moved to another computing module and transmission data to be moved to the external network;
a compartmentalized computing module 30, which includes a third movement data storage unit 31, that is connected to the first computing module 10 through a third data monitoring line 35 and a third data transmission and reception line 36, determines through the third data monitoring line 35 whether the reception data exists in the first movement data storage unit 11 of the first computing module 10, receives the reception data by switching on the third data transmission and reception line 36 when the reception data exists in the first movement data storage unit 11, switches off the third data transmission and reception line 36 upon completion of reception, and stores completely received reception data;
a second computing module 50 that is not connected to an external network and is connected to the compartmentalized computing module 30 through a fourth data monitoring line 55 and a fourth data transmission and reception line 56, determines through the fourth data monitoring line 55 whether the reception data exists in the third movement data storage unit 31 of the compartmentalized computing module 30, receives the reception data by switching on the fourth data transmission and reception line 56 when the reception data exists in the third movement data storage unit 31, and switches off the fourth data transmission and reception line 56 upon completion of reception; and
a user interface unit 60, wherein a user manipulates the user interface unit 60 to switch the user interface unit 60 to be connected to the first computing module 10 or the second computing module 50.

2. The device 1 of claim 1, wherein, when transmission data to be moved to an external network exists, the second computing module 50
switches on the fourth data transmission and reception line 56, transmits the transmission data to the third movement data storage unit 31 of the compartmentalized computing module 30, and switches off the fourth data transmission and reception line 56 upon completion of the transmission, and
the compartmentalized computing module 30
switches on the third data transmission and reception line 36, transmits the transmission data stored in the third movement data storage unit 31 to the first movement data storage unit 11 of the first computing module 10, and switches off the third data transmission and reception line 36 upon completion of the transmission.

3. A mobile computing device 1 including a compartmentalized computing module 30, the device 1 comprising:
a first computing module 10, which includes a first movement data storage unit 11, that is connected to an external network and stores reception data to be moved to another computing module and transmission data to be moved to the external network;
an inspection computing module 20, which includes a second movement data storage unit 21, that is connected to the first computing module 10 through a first data monitoring line 15 and a first data transmission and reception line 16 and stores the reception data;
a compartmentalized computing module 30, which includes a third movement data storage unit 31, that is connected to the inspection computing module 20 through a second data monitoring line 25 and a second data transmission and reception line 26, is connected to the first computing module 10 through a third data transmission and reception line 36, and stores the reception data and the transmission data;
a second computing module 50 that is not connected to an external network and is connected to the compartmentalized computing module 30 through a fourth data monitoring line 55 and a fourth data transmission and reception line 56; and
a user interface unit 60, wherein a user manipulates the user interface unit 60 to switch the user interface unit 60 to be connected to the first computing module 10 or the second computing module 50,
the inspection computing module 20
determines through the first data monitoring line 15 whether the reception data exists in the first movement data storage unit 11 of the first computing module 10, receives the reception data by switching on the first data transmission and reception line 16 when the reception data exists in the first movement data storage unit 11, and switches off the first data transmission and reception line 16 upon completion of reception, and
determines whether the received reception data is suitable to be moved to another computing module upon completion of receiving the reception data and stores the reception data in the second movement data storage unit 21 if the determination indicates that the reception data is suitable to be moved to another computing module,
the compartmentalized computing module 30
determines through the second data monitoring line 25 whether the reception data exists in the second movement data storage unit 21 of the inspection computing module 20, receives the reception data by switching on the second data transmission and reception line 26 when the reception data exists in the second movement data storage unit 21, switches off the second data transmission and reception line 26 upon completion of reception, and stores completely received reception data in the third movement data storage unit 31, and
the second computing module 50
determines through the fourth data monitoring line 55 whether the reception data exists in the third movement data storage unit 31 of the compartmentalized computing module 30, receives the reception data by switching on the fourth data transmission and reception line 56 when the reception data exists in the third movement data storage unit 31, and switches off the fourth data transmission and reception line 56 upon completion of reception.

4. The device 1 of claim 3, wherein, if a determination result of whether the reception data received upon completion of receiving the reception data is suitable to be moved to another computing module indicates that the reception data is not suitable to be moved to another computing module, the inspection computing module 20 treats the reception data using a vaccine program if the reception data is determined to be curable and
stores the treated data in the second movement data storage unit 21 upon completion of treatment of the reception data,
wherein the compartmentalized computing module 30
determines through the second data monitoring line 25 whether the reception data or the treated data exists in the second movement data storage unit 21 of the inspection computing module 20, receives the reception data or the treated data by switching on the second data transmission and reception line 26 if the reception data or the treated data exists in the second movement data storage unit 21, switches off the second data transmission and reception line 26 upon completion of reception, and stores completely received reception data or the treated data in the third movement data storage unit 31, and
the second computing module 50
determines through the fourth data monitoring line 55 whether the reception data or the treated data exists in the third movement data storage unit 31 of the compartmentalized computing module 30, receives the reception data or the treated data by switching on the fourth data transmission and reception line 56 if the reception data or the treated data exists in the third movement data storage unit 31, and switches off the fourth data transmission and reception line 56 upon completion of reception.

5. A mobile computing device 1 including a compartmentalized computing module 30, the device 1 comprising:
a first computing module 10, which includes a first movement data storage unit 11, that is connected to an external network and stores reception data to be moved to another computing module and transmission data to be moved to the external network;
an inspection computing module 20, which includes a second movement data storage unit 21, that is connected to the first computing module 10 through a first data monitoring line 15 and a first data transmission and reception line 16 and stores the reception data;
a compartmentalized computing module 30, which includes a third movement data storage unit 31, that is connected to the inspection computing module 20 through a second data monitoring line 25 and a second data transmission and reception line 26, is connected to the first computing module 10 through a third data transmission and reception line 36, and stores the reception data and the transmission data;
a second computing module 50 that is not connected to an external network and is connected to the compartmentalized computing module 30 through a fourth data monitoring line 55 and a fourth data transmission and reception line 56; and
a user interface unit 60, wherein a user manipulates the user interface unit 60 to switch the user interface unit 60 to be connected to the first computing module 10 or the second computing module 50,
the inspection computing module 20
determines through the first data monitoring line 15 whether the reception data exists in the first movement data storage unit 11 of the first computing module 10, requests the first computing module 10 to encrypt the reception data using an encryption key by switching on the first data transmission and reception line 16 when the reception data exists in the first movement data storage unit 11, and switches off the first data transmission and reception line 16, and
determines through the first data monitoring line 15 whether encryption of the reception data is completed, switches on the first data transmission and reception line 16 upon completion of encryption and receives the encrypted data, switches off the first data transmission and reception line 16 upon completion of the reception, and stores the decrypted data in the second movement data storage unit 21 if the decrypted data is suitable to be moved to another computing module,
the compartmentalized computing module 30
determines through the second data monitoring line 25 whether the decrypted data exists in the second movement data storage unit 21 of the inspection computing module 20, switches on the second data transmission and reception line 26 when the decrypted data exists in the second movement data storage unit 21, receives the decrypted data, switches off the second data transmission and reception line 26 upon completion of reception, and stores completely received decrypted data in the third movement data storage unit 31, and
the second computing module 50
determines through the fourth data monitoring line 55 whether the decrypted data exists in the third movement data storage unit 31 of the compartmentalized computing module 30, switches on the fourth data transmission and reception line 56 when the decrypted data exists in the third movement data storage unit 31, receives the decrypted data, and switches off the fourth data transmission and reception line 56 upon completion of reception.

6. The device 1 of claim 5, wherein, if a determination result of whether the decrypted data upon completion of decrypting the encrypted data is suitable to be moved to another computing module indicates that the decrypted data is not suitable to be moved to another computing module, the inspection computing module 20 treats the decrypted data using a vaccine program if the decrypted data is determined to be curable and
stores the treated data in the second movement data storage unit 21 upon completion of treatment of the decrypted data,
wherein the compartmentalized computing module 30
determines through the second data monitoring line 25 whether the decrypted data or the treated data exists in the second movement data storage unit 21 of the inspection computing module 20, receives the decrypted data or the treated data by switching on the second data transmission and reception line 26 if the decrypted data or the treated data exists in the second movement data storage unit 21, switches off the second data transmission and reception line 26 upon completion of reception, and stores completely received decrypted data or treated data in the third movement data storage unit 31, and
the second computing module 50
determines through the fourth data monitoring line 55 whether the decrypted data or the treated data exists in the third movement data storage unit 31 of the compartmentalized computing module 30, receives the decrypted data or the treated data by switching on the fourth data transmission and reception line 56 if the decrypted data or the treated data exists in the third movement data storage unit 31, and switches off the fourth data transmission and reception line 56 upon completion of reception.

7. A mobile computing device 1 including a compartmentalized computing module 30, the device 1 comprising:
a first computing module 10, which includes a first movement data storage unit 11, that is connected to an external network and stores reception data to be moved to another computing module and transmission data to be moved to the external network;
a compartmentalized computing module 30, which includes a third movement data storage unit 31, that is connected to the first computing module 10 through a third data monitoring line 35 and a third data transmission and reception line 36, determines through the third data monitoring line 35 whether the reception data exists in the first movement data storage unit 11 of the first computing module 10, switches on the third data transmission and reception line 36 when the reception data exists in the first movement data storage unit 11, receives the reception data, switches off the third data transmission and reception line 36 upon completion of reception, and stores completely received reception data;
a second computing module 50 not connected to an external network;
a compartmentalized storage module 40 selectively connected to the compartmentalized computing module 30 or the second computing module 50; and
a user interface unit 60, wherein a user manipulates the user interface unit 60 to switch the user interface unit 60 to be connected to the first computing module 10 or the second computing module 50,
the compartmentalized storage module 40 is connected to the compartmentalized computing module 30 and receives and stores the reception data stored in the third movement data storage unit 31 from the compartmentalized computing module 30 when the user interface unit 60 is connected to the first computing module 10, and
the compartmentalized storage module 40 is connected to the second computing module 50 when the user interface unit 60 is connected to the second computing module 50.

8. The device 1 of claim 7, wherein, when the user interface unit 60 is connected to the second computing module 50, a user reads the reception data stored in the compartmentalized storage module 40, copies the reception data stored in the compartmentalized storage module 40 to the second computing module 50, and stores the transmission data in the compartmentalized storage module 40 by manipulating the user interface unit 60,
when the user interface unit 60 is connected to the first computing module 10,
the compartmentalized computing module 30
receives the transmission data stored in the compartmentalized storage module 40 and stores the received transmission data in the third movement data storage unit 31,
switches on the third data transmission and reception line 36, transmits the transmission data stored in the third movement data storage unit 31 to the first movement data storage unit 11 of the first computing module 10, and switches off the third data transmission and reception line 36 upon completion of transmission, and
the user confirms and uses the transmission data stored in the compartmentalized storage module 40 by reading the transmission data stored in the first movement data storage unit 11 by manipulating the user interface unit 60.

9. A mobile computing device 1 including a compartmentalized computing module 30, the device 1 comprising:
a first computing module 10, which includes a first movement data storage unit 11, that is connected to an external network and stores reception data to be moved to another computing module and transmission data to be moved to the external network;
an inspection computing module 20, which includes a second movement data storage unit 21, that is connected to the first computing module 10 through a first data monitoring line 15 and a first data transmission and reception line 16 and stores the reception data;
a compartmentalized computing module 30, which includes a third movement data storage unit 31, that is connected to the inspection computing module 20 through a second data monitoring line 25 and a second data transmission and reception line 26, is connected to the first computing module 10 through a third data transmission and reception line 36, and stores the reception data and the transmission data;
a second computing module 50 not connected to an external network;
a compartmentalized storage module 40 selectively connected to the compartmentalized computing module 30 and the second computing module 50; and
a user interface unit 60, wherein a user manipulates the user interface unit 60 to switch the user interface unit 60 to be connected to the first computing module 10 or the second computing module 50,
the inspection computing module 20
determines through the first data monitoring line 15 whether the reception data exists in the first movement data storage unit 11 of the first computing module 10, receives the reception data by switching on the first data transmission and reception line 16 when the reception data exists in the first movement data storage unit 11, and switches off the first data transmission and reception line 16 upon completion of reception, and
determines whether the received reception data is suitable to be moved to another computing module upon completion of receiving the reception data and stores the reception data in the second movement data storage unit 21 if the determination indicates that the reception data is suitable to be moved to another computing module,
the compartmentalized computing module 30
determines through the second data monitoring line 25 whether the reception data exists in the second movement data storage unit 21 of the inspection computing module 20, receives the reception data by switching on the second data transmission and reception line 26 when the reception data exists in the second movement data storage unit 21, switches off the second data transmission and reception line 26 upon completion of reception, and stores completely received reception data in the third movement data storage unit 31,
the compartmentalized storage module 40 is connected to the compartmentalized computing module 30 and receives and stores the reception data stored in the third movement data storage unit 31 from the compartmentalized computing module 30 when the user interface unit 60 is connected to the first computing module 10, and
the compartmentalized storage module 40 is connected to the second computing module 50 when the user interface unit 60 is connected to the second computing module 50.

10. The device 1 of claim 9, wherein, if a determination result of whether the reception data received upon completion of receiving the reception data is suitable to be moved to another computing module indicates that the reception data is not suitable to be moved to another computing module, the inspection computing module 20 treats the reception data using a vaccine program if the reception data is determined to be curable and
stores the treated data in the second movement data storage unit 21 upon completion of treatment of the reception data,
wherein the compartmentalized computing module 30
determines through the second data monitoring line 25 whether the reception data or the treated data exists in the second movement data storage unit 21 of the inspection computing module 20, receives the reception data or the treated data by switching on the second data transmission and reception line 26 if the reception data or the treated data exists in the second movement data storage unit 21, switches off the second data transmission and reception line 26 upon completion of reception, and stores completely received reception data or treated data in the third movement data storage unit 31, and
the compartmentalized storage module 40 is connected to the compartmentalized computing module 30 and receives and stores the reception data or the treated data stored in the third movement data storage unit 31 from the compartmentalized computing module 30 when the user interface unit 60 is connected to the first computing module 10.

11. The device 1 of claim 10, wherein, when the user interface unit 60 is connected to the second computing module 50, a user reads the reception data or the treated data stored in the compartmentalized storage module 40, copies the reception data or treated data stored in the compartmentalized storage module 40 to the second computing module 50, and stores the transmission data in the compartmentalized storage module 40 by manipulating the user interface unit 60,
when the user interface unit 60 is connected to the first computing module 10,
the compartmentalized computing module 30
receives the transmission data stored in the compartmentalized storage module 40 and stores the received transmission data in the third movement data storage unit 31,
switches on the third data transmission and reception line 36, transmits the transmission data stored in the third movement data storage unit 31 to the first movement data storage unit 11 of the first computing module 10, and switches off the third data transmission and reception line 36 upon completion of transmission, and
the user confirms and uses the transmission data stored in the compartmentalized storage module 40 by reading the transmission data stored in the first movement data storage unit 11 by manipulating the user interface unit 60.

12. A mobile computing device 1 including a compartmentalized computing module 30, the device 1 comprising:
a first computing module 10, which includes a first movement data storage unit 11, that is connected to an external network and stores reception data to be moved to another computing module and transmission data to be moved to the external network;
an inspection computing module 20, which includes a second movement data storage unit 21, that is connected to the first computing module 10 through a first data monitoring line 15 and a first data transmission and reception line 16 and stores the reception data;
a compartmentalized computing module 30, which includes a third movement data storage unit 31, that is connected to the inspection computing module 20 through a second data monitoring line 25 and a second data transmission and reception line 26, is connected to the first computing module 10 through a third data transmission and reception line 36, and stores the reception data and the transmission data;
a second computing module 50 not connected to an external network;
a compartmentalized storage module 40 selectively connected to the compartmentalized computing module 30 and the second computing module 50; and
a user interface unit 60, wherein a user manipulates the user interface unit 60 to switch the user interface unit 60 to be connected to the first computing module 10 or the second computing module 50,
the inspection computing module 20
determines through the first data monitoring line 15 whether the reception data exists in the first movement data storage unit 11 of the first computing module 10, requests the first computing module 10 to encrypt the reception data using an encryption key by switching on the first data transmission and reception line 16 when the reception data exists in the first movement data storage unit 11, and switches off the first data transmission and reception line 16,
determines through the first data monitoring line 15 whether encryption of the reception data is completed, switches on the first data transmission and reception line 16 upon completion of encryption and receives the encrypted data, and switches off the first data transmission and reception line 16 upon completion of the reception, and
decrypts the encrypted data using a decryption key upon completion of receiving the encrypted data, determines whether the decrypted data is suitable to be moved to another computing module, and stores the decrypted data in the second movement data storage unit 21 if the decrypted data is suitable to be moved to another computing module,
the compartmentalized computing module 30
determines through the second data monitoring line 25 whether the decrypted data exists in the second movement data storage unit 21 of the inspection computing module 20, switches on the second data transmission and reception line 26 when the decrypted data exists in the second movement data storage unit 21, receives the decrypted data, switches off the second data transmission and reception line 26 upon completion of reception, and stores completely received decrypted data in the third movement data storage unit 31,
the compartmentalized storage module 40 is connected to the compartmentalized computing module 30 and receives and stores the decrypted data stored in the third movement data storage unit 31 from the compartmentalized computing module 30 when the user interface unit 60 is connected to the first computing module 10, and
the compartmentalized storage module 40 is connected to the second computing module 50 when the user interface unit 60 is connected to the second computing module 50.

13. The device 1 of claim 12, wherein, if a determination result of whether the decrypted data upon completion of decrypting the encrypted data is suitable to be moved to another computing module indicates that the decrypted data is not suitable to be moved to another computing module, the inspection computing module 20 treats the decrypted data using a vaccine program if the decrypted data is determined to be curable and
stores the treated data in the second movement data storage unit 21 upon completion of treatment of the decrypted data,
wherein the compartmentalized computing module 30
determines through the second data monitoring line 25 whether the decrypted data or the treated data exists in the second movement data storage unit 21 of the inspection computing module 20, receives the decrypted data or the treated data by switching on the second data transmission and reception line 26 if the decrypted data or the treated data exists in the second movement data storage unit 21, switches off the second data transmission and reception line 26 upon completion of reception, and stores completely received decrypted data or treated data in the third movement data storage unit 31, and
the compartmentalized storage module 40 is connected to the compartmentalized computing module 30 and receives and stores the decrypted data or the treated data stored in the third movement data storage unit 31 from the compartmentalized computing module 30 when the user interface unit 60 is connected to the first computing module 10.

14. The device 1 of claim 13, wherein, when the user interface unit 60 is connected to the second computing module 50, a user reads the decrypted data or the treated data stored in the compartmentalized storage module 40, copies the decrypted data or the treated data stored in the compartmentalized storage module 40 to the second computing module 50, and stores the transmission data in the compartmentalized storage module 40 by manipulating the user interface unit 60,
when the user interface unit 60 is connected to the first computing module 10,
the compartmentalized computing module 30
receives the transmission data stored in the compartmentalized storage module 40 and stores the received transmission data in the third movement data storage unit 31,
switches on the third data transmission and reception line 36, transmits the transmission data stored in the third movement data storage unit 31 to the first movement data storage unit 11 of the first computing module 10, and switches off the third data transmission and reception line 36 upon completion of transmission, and
the user confirms and uses the transmission data stored in the compartmentalized storage module 40 by reading the transmission data stored in the first movement data storage unit 11 by manipulating the user interface unit 60.

15. The device 1 of any one of claims 1 to 14, wherein the user interface unit 60 includes at least one or more of a touch screen and buttons, a display, a microphone, a speaker, and a camera.

16. The device 1 of claim 15, wherein the camera is not connected to the first computing module 10 even if the user interface unit 60 is connected to the first computing module 10, and
the camera is connected to the second computing module 50 if the user interface unit 60 is connected to the second computing module 50.
